# EUROPÄISCHE PATENTANMELDUNG

(11) **EP 2 006 708 A1**
(43) Veröffentlichungstag der Anmeldung: **24.12.2008**
(21) Anmeldenummer: 08103980.2
(22) Anmeldetag: 15.05.2008
(51) Int. Cl.: G01S 1/68, G05D 1/02

(54) **Lokalisierungssystem für ein Roboterfahrzeug**

(30) Priorität: 15.06.2007 DE 102007027648
(71) Anmelder: Robert Bosch GmbH, 70442 Stuttgart (DE)
(72) Erfinder: Seidel, Juergen, 73728 Esslingen (DE); Biber, Peter, 72070 Tuebingen (DE); Koeder, Thilo, 70839 Gerlingen (DE); Koch, Christoph, 70178 Stuttgart (DE); Lorenz, Markus, 74080 Heilbronn (DE); Albert, Amos, 71229 Leonberg (DE); Graefenstein, Juergen, 48529 Nordhorn (DE)

(57) **Zusammenfassung**

Die Erfindung betrifft ein Lokalisierungssystem (1) für ein Roboterfahrzeug (2), umfassend: ein Roboterfahrzeug (2) mit einer Sendeeinheit (11) zum Aussenden eines elektromagnetischen Signals (19, 20) und mit einer Empfangseinheit (12) zum Empfangen eines ersten an einer ersten Landmarke (4) reflektierten elektromagnetischen Signals (19) und mindestens eines zweiten an einer zweiten Landmarke (5) reflektierten elektromagnetischen Signals (20), und mit einer Steuereinheit zum Ermitteln der Position des Roboterfahrzeugs (2) auf der Basis der von der Empfangseinheit (12) empfangenen elektromagnetischen Signalen sowie eine erste und mindestens eine zweite Landmarke (4, 5) mit jeweils mindestens einem Reflektionselement (15a, 15b; 16a bis 16d). Erfindungsgemäß ist vorgesehen, dass die erste Landmarke (4) und die zweite Landmarke (5) ein voneinander unterschiedliches Reflektionsverhalten aufweisen.

## Beschreibung

### Stand der Technik

Die Erfindung betrifft ein Lokalisierungssystem für einen Roboterfahrzeug gemäß dem Oberbegriff des Anspruchs 1.

Grundsätzlich ist es zur Bestimmung der Position eines Roboterfahrzeugs bekannt, ausgehend von dem Roboterfahrzeug Entfernungsmessungen zu Landmarken durchzuführen. Dabei wird von dem Roboterfahrzeug ein elektromagnetisches Signal ausgesendet, das an mehreren Landmarken reflektiert wird. Durch Ermitteln der Laufzeiten der an den Landmarken reflektierten Signale ist eine exakte Positionsbestimmung des Roboterfahrzeugs, beispielsweise durch Triangulation oder Trilateration möglich. Nachteilig bei dem beschriebenen Lokalisierungssystem ist es, dass das Roboterfahrzeug die jeweiligen Landmarken nicht identifizieren kann, d.h. die gemessenen Laufzeiten nicht bestimmten Landmarken zuordnen kann, wodurch die exakte Positionsbestimmung erschwert wird und zusätzlich Odometriedaten benötigt werden.

Aus der GB 2 277 152 A ist ein Lokalisierungssystem für Roboterfahrzeuge bekannt, bei dem die Position eines Roboterfahrzeugs durch eine aktive Kommunikation des Roboterfahrzeugs mit einer Anzahl von Landmarken bestimmt wird. Hierzu müssen die Landmarken jedoch "intelligent" ausgebildet werden. Insbesondere müssen die Landmarken mit aktiven Sendeeinheiten versehen werden, um mit dem Roboterfahrzeug kommunizieren zu können. Das bekannte Lokalisierungssystem ist daher technisch aufwändig und kostenintensiv.

### Offenbarung der Erfindung

### Technische Aufgabe

Der Erfindung liegt daher die Aufgabe zugrunde, ein einfach aufgebautes Lokalisierungssystem für ein Roboterfahrzeug vorzuschlagen, das eine Identifikation der Landmarken durch das Roboterfahrzeug zulässt, ohne dass die Landmarken eine aktive Sendeeinheit aufweisen müssen.

### Technische Lösung

Diese Aufgabe wird mit den Merkmalen des Anspruchs 1 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Zeichnungen angegebenen Merkmalen.

Der Erfindung liegt die Überlegung zugrunde, dass mindestens zwei Landmarken dadurch voneinander unterschieden werden können, dass die an ihnen reflektierten elektromagnetischen Signale (Strahlungen) unterschiedliche Charakteristika aufweisen. Die Erfindung hat erkannt, dass dies dadurch erreicht werden kann, dass die Landmarken ein voneinander unterschiedliches Reflektionsverhalten aufweisen, so dass die an ihnen reflektierten elektromagnetischen Signale, insbesondere Radar-Signale, charakteristisch für die jeweilige Landmarke sind. Die Steuereinheit ist dabei derart ausgebildet, dass diese die von der mindestens einen Empfangseinheit empfangenen, an den Landmarken reflektierten elektromagnetischen Signale den entsprechenden Landmarken zuordnen kann, die Landmarken also anhand der Signalcharakteristik identifizieren kann, insbesondere durch Vergleich der Charakteristika der empfangenen Signale mit in Zuordnungstabellen abgelegten Signalcharakteristika. Auf diese Weise können die Steuermittel nicht nur die Entfernung zu unterschiedlichen Landmarken, beispielsweise durch die Messung der Laufzeit der Signale, bestimmen, sondern sie können die gemessene Entfernung auch bestimmten Landmarken zuordnen und dadurch exakter als bisher die Position des Roboterfahrzeugs bestimmen. Dies ist insbesondere dann von Vorteil, wenn das Lokalisierungssystem eine Vielzahl von Landmarken aufweist, die einer Arbeitsfläche für das Roboterfahrzeug zugeordnet sind und diese vorzugsweise begrenzen. Bevorzugt weisen sämtliche Landmarken des Lokalisierungssystems ein unterschiedliches Reflektionsverhalten auf. Das Konzept der Erfindung ermöglicht es, dass auf aktive Sendeeinheiten, wie beispielsweise ein aus der Luftfahrttechnik bekanntes Sekundärradar an den Landmarken zur aktiven Identifizierung der Landmarken verzichtet werden kann. Das erfindungsgemäße Lokalisierungssystem ist von einem einfachen Aufbau und kann daher kostengünstig bereitgestellt werden. Bevorzugt werden als elektromagnetische Signale Radar-Signale eingesetzt.

In Weiterbildung der Erfindung ist mit Vorteil vorgesehen, dass die Landmarken des Lokalisierungssystems derart ausgebildet sind, dass die jeweiligen reflektierten elektromagnetischen Signale einen voneinander unterschiedlich modulierten Intensitätsverlauf aufweisen, insbesondere derart, dass die Anzahl von Intensitätspeaks pro Zeiteinheit bei den an unterschiedlichen Landmarken reflektierten elektromagnetischen Signalen unterschiedlich ist. Durch die Bestimmung der Anzahl von Intensitätspeaks pro Zeiteinheit können die Steuermittel somit auf eine bestimmte Landmarke schließen und somit die Entfernung zu einer bestimmten Landmarke ermitteln.

Ein voneinander unterschiedliches Reflektionsverhalten mehrerer Landmarken kann dadurch erhalten werden, dass die Landmarken eine unterschiedliche Anzahl von Reflektionselementen und/oder unterschiedlich ausgebildete Reflektionselemente aufweisen. Hierdurch wird erreicht, dass die Intensität der an den verschiedenen Landmarken reflektierten elektromagnetischen Signale unterschiedlich ist und die Identifizierung der Landmarken durch einen Intensitätsvergleich möglich ist.

Bevorzugt ist eine Ausführungsform, bei der die Reflektionselemente der Landmarken aktiv bewegt angetrieben werden. Ein unterschiedliches Reflektionsverhalten der Landmarken mit bewegten Reflektionselementen kann beispielsweise dadurch realisiert werden, dass die Anzahl der Reflektionselemente unterschiedlich ist und/oder die Reflektionselemente unterschiedlich ausgebildet sind.

Ferner ist es in Weiterbildung der Erfindung möglich, dass die Reflektionselemente unterschiedlicher Landmarken unterschiedlich bewegt werden, d.h. beispielsweise mit einer unterschiedlichen Geschwindigkeit und/oder auf einer unterschiedlichen Bewegungsbahn. Beispielsweise können die Reflektionselemente einer ersten Landmarke schwingend auf einer Kreissegmentbahn hin und her bewegt werden, wohingegen die Reflektionselemente einer zweiten Landmarke rotatorisch, insbesondere auf einer Kreisbahn angetrieben werden. Zusätzlich zu einem unterschiedlichen Reflektionsverhalten der Reflektionselemente der Landmarken kann die Anzahl der Reflektionselemente unterschiedlicher Landmarken unterschiedlich sein und/oder die Reflektionselemente können, zumindest teilweise, unterschiedlich ausgebildet sein.

Besonders bevorzugt ist eine Ausführungsform, bei der die Reflektionselemente von mindestens zwei Landmarken rotatorisch, vorzugsweise auf gleichen Bewegungsbahnen, insbesondere jeweils mit einer konstanten Geschwindigkeit angetrieben werden. Bevorzugt erfolgt die Rotation der Reflektionselemente um eine lotrechte Rotationsachse, damit die Landmarken aus allen Horizontalrichtungen, beispielsweise mittels einer Radarkeule des Roboterfahrzeugs, erfasst werden können. Ein unterschiedlich modulierter Intensitätsverlauf der reflektierten elektromagnetischen Signale kann dadurch erzielt werden, dass die Rotationsgeschwindigkeit der Reflektionselemente unterschiedlicher Landmarken unterschiedlich groß ist. Zusätzlich oder alternativ kann die Anzahl der Reflektionselemente bei den Landmarken unterschiedlich sein und/oder die Reflektionselemente können unterschiedlich ausgebildet sein.

Zum, insbesondere rotatorischen Antreiben des mindestens einen Reflektionselementes einer Landmarke ist in Weiterbildung der Erfindung mindestens ein Elektromotor vorgesehen. Vorzugsweise sind eine Vielzahl von Landmarken, insbesondere sämtliche Landmarken, mit jeweils einem Elektromotor zum Antreiben des jeweils mindestens einen Reflektionselementes vorgesehen.

Von besonderem Vorteil ist es, wenn die Landmarken autark, d.h. ohne eine Anbindung an ein externes Stromnetz funktionieren. Die Energie zum Betreiben des jeweiligen Elektromotors wird vorzugsweise von einer Batterie, einem Akkumulator und/oder einer Solarzelle bereitgestellt, wobei zumindest eines dieser Stromspeicher bzw. Stromerzeuger vorzugsweise unmittelbar an der jeweiligen Landmarke angeordnet ist.

Um ein Verschmutzen der Reflektionselemente sowie eine Beeinflussung der Bewegung der Reflektionselemente, insbesondere durch Windeinflüsse zu vermeiden, ist in Weiterbildung der Erfindung vorgesehen, dass das mindestens eine Reflektionselement mindestens einer, vorzugsweise sämtlicher Landmarken innerhalb jeweils eines für elektromagnetische Signale durchlässigen Gehäuses, insbesondere aus Kunststoff angeordnet ist. Neben den zuvor beschriebenen Funktionen hat das Gehäuse auch eine ästhetische Wirkung.

In Weiterbildung der Erfindung ist mit Vorteil vorgesehen, dass die Steuermittel die Antriebsmittel des Roboterfahrzeugs auf Basis der ermittelten Positionen ansteuernd ausgebildet sind. So verhindern die Steuermittel beispielsweise ein Verlassen einer Arbeitsfläche, insbesondere einer Rasenfläche. Daneben ist es möglich, das die Steuermittel die Antriebsmittel derart ansteuern, dass das Roboterfahrzeug einer bestimmten (zeitoptimierten) Fahrtstrecke folgt, beispielsweise die Arbeitsfläche streifenförmig, spiralförmig oder mäanderförmig, insbesondere in zueinander parallelen Bahnen abfährt.

Besonders bevorzugt ist eine Ausführungsform, bei der das Roboterfahrzeug als Rasenmäher mit einem Mähwerk ausgebildet ist, wobei die Steuermittel bevorzugt derart ausgebildet sind, dass sie das Mähwerk in Abhängigkeit der ermittelten Position an- oder ausschalten.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: in einer schematischen Darstellung ein Lokalisierungssystem mit einem als Rasenmäher ausgebildeten Roboterfahrzeug sowie einer Vielzahl von eine Arbeitsfläche begrenzenden Landmarken,
- Fig. 2:: eine Sende- und Empfangseinheit sowie zwei unterschiedlich ausgebildete, jeweils rotierbar angetriebene Landmarken,
- Fig. 3:: die Intensitätsverläufe der an den Landmarken gemäß Fig. 2 reflektierten elektromagnetischen Signale,
- Fig. 4:: in einer schematischen perspektivischen Darstellung den Aufbau einer Landmarke,
- Fig. 5:: eine mögliche Ausführungsform einer Landmarke und
- Fig. 6:: eine alternativ ausgebildete Landmarke.

In den Figuren sind gleiche Bauteile und Bauteile mit der gleichen Funktion mit den gleichen Bezugszeichen gekennzeichnet.

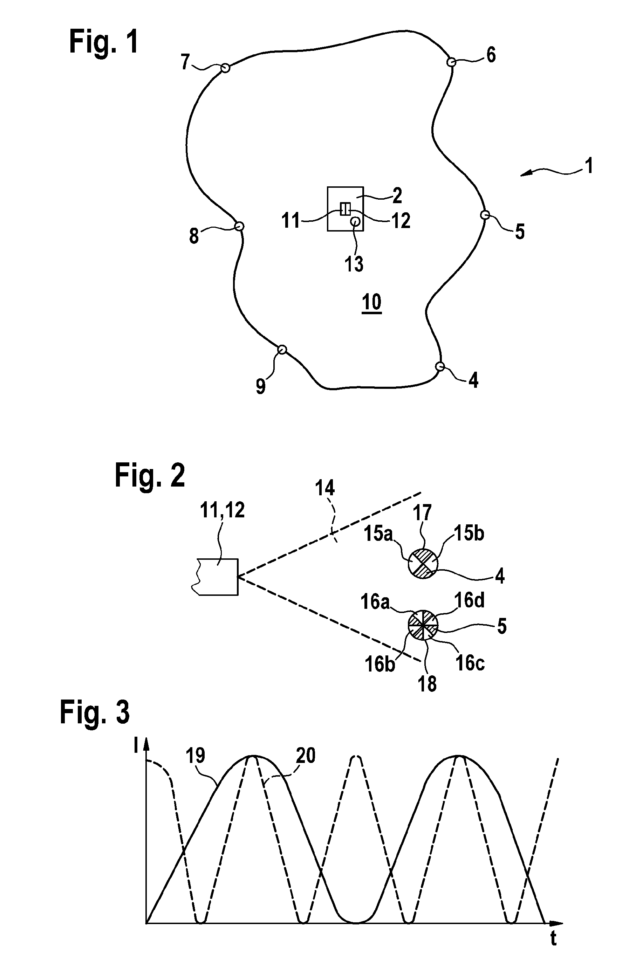

In Fig. 1 ist ein Lokalisierungssystem 1 für ein als Rasenmäher ausgebildetes Roboterfahrzeug 2 gezeigt. Das Lokalisierungssystem 1 umfasst eine Anzahl von Landmarken, nämlich eine erste Landmarke 4, eine zweite Landmarke 5, eine dritte Landmarke 6, eine vierte Landmarke 7, eine fünfte Landmarke 8 und eine sechste Landmarke 9. Sämtliche Landmarken 4 bis 9 weisen ein voneinander unterschiedliches Reflektionsverhalten für Radarstrahlung auf.

Die Landmarken 4 bis 9 begrenzen eine Arbeitsfläche 10 für das Roboterfahrzeug 2. Das Roboterfahrzeug 2 umfasst eine Sendeeinheit 11 für Radarstrahlung (elektromagnetisches Signal) sowie eine Empfangseinheit 12 zum Empfangen von an den Landmarken 4 bis 9 reflektierter Radarstrahlung (reflektierte elektromagnetische Signale). Die Sendeeinheit 11 und die Empfangseinheit 12 sind signalleitend mit Steuermitteln 13 zum Ansteuern von nicht gezeigten Antriebsmitteln verbunden. Die Steuermittel 13 messen die Zeitspannen zwischen dem Aussenden eines elektromagnetischen Signals von der Sendeeinrichtung 11 und dem jeweiligen Empfang von an den Landmarken 4 bis 9 reflektierten elektromagnetischen Signalen. Die Steuermittel 13 sind dabei derart ausgebildet, dass sie die zu den empfangenen elektromagnetischen Signalen gehörenden Landmarken 4 bis 9 an bestimmten Signalcharakteristika der reflektierten Signale identifizieren können, so dass die Steuermittel 13 die exakte Position des Roboterfahrzeugs 2 bestimmen und das Roboterfahrzeug 2 bzw. dessen Antriebsmittel in Abhängigkeit dieser Positionsinformation ansteuern können. Bevorzugt sind die Steuermittel 13 derart ausgebildet, dass sich das Roboterfahrzeug 2 ausschließlich innerhalb der Arbeitsfläche 10, vorzugsweise entlang von zueinander parallelen Bahnen bewegt.

In Fig. 2 ist schematisch eine kombinierte Sende- und Empfangseinheit 11, 12 zum Aussenden und Empfangen von elektromagnetischen Signalen dargestellt. Das ausgesendete elektromagnetische Signal, angedeutet durch eine Radarkeule 14, wird an einer ersten Landmarke 4 sowie an einer unterschiedlich ausgebildeten zweiten Landmarke 5 reflektiert. Die erste Landmarke 4 besitzt zwei Reflektionselemente 15a, 15b, die um 180° zueinander versetzt angeordnet sind. Die zweite Landmarke 5 weist vier Reflektionselemente 16a bis 16d auf, die zueinander um jeweils 90° versetzt angeordnet sind. Sämtliche Reflektionselemente 15a, 15b, und 16a bis 16d sind als Zylindersegmentaussparungen in jeweils einem Zylinderkörper 17, 18 ausgebildet. Die Zylinderkörper 17, 18 sind rotierbar um eine vertikale Rotationsachse angetrieben, wobei die erste und die zweite Landmarke 4, 5 in dem gezeigten Ausführungsbeispiel mit konstanter Rotationsgeschwindigkeit rotieren.

Hieraus ergeben sich unterschiedliche Intensitätsverläufe des an der ersten Landmarke 4 reflektierten ersten elektromagnetischen Signals 19 und des an der zweiten Landmarke 5 reflektierten zweiten elektromagnetischen Signals 20. Aus Fig. 3 ist der Intensitätsverlauf des ersten und des zweiten reflektierten elektromagnetischen Signals 19, 20 ersichtlich. Dabei ist die Intensität über der Zeit aufgetragen, wobei der Intensitätsverlauf der elektromagnetischen Signale 19, 20 bei einer Umdrehung der Zylinderkörper 17, 18 gemäß Fig. 2 gezeigt ist. Zu erkennen ist, dass das zweite elektromagnetische Signal 20 die doppelte Frequenz hat wie das erste elektromagnetische Signal 19.

Aus Fig. 3 ergibt sich weiterhin, dass die Peaks des zweiten elektromagnetischen Signals 20 schmaler sind als die des ersten elektromagnetischen Signals 19. Aufgrund dieser Unterschiede zwischen den reflektierten elektromagnetischen Signalen 19, 20 können die Steuermittel 13 die reflektierten elektromagnetischen Signale 19, 20 den entsprechenden Landmarken 4, 5 zuordnen.

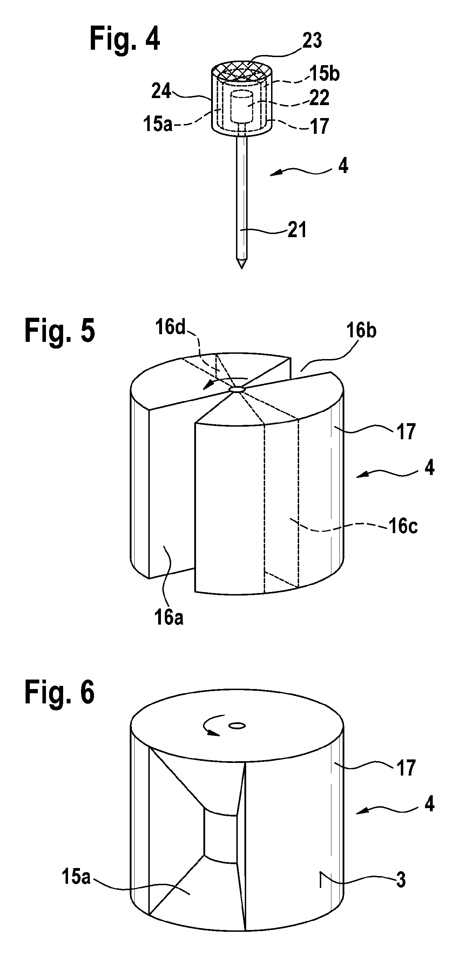

In Fig. 4 ist in einer schematischen Darstellung der Aufbau einer Landmarke 4 gezeigt. Die Landmarke 4 umfasst einen Stab 21 zum Festlegen der Landmarke 4 an der Grenze einer Arbeitsfläche durch in den Boden stecken. Relativ zu dem Stab 21 ist ein Zylinderkörper 17 verdrehbar um eine vertikale Drehachse angeordnet. Zum rotatorischen Antreiben des Zylinderkörpers 17 ist ein Elektromotor 22 vorgesehen, der mit elektrischer Energie von Solarzellen 23 betrieben wird. Im Zylinderkörper 17 sind Reflektionselemente 15a, 15b ausgebildet, wobei die Reflektionselemente 15a, 15b zur Reflektion von elektromagnetischer Strahlung als tortenstückförmige Aussparungen im Zylinderkörper 17 ausgebildet sind. Der Zylinderkörper 17 ist mit Radialabstand von einem Gehäuse 24 aus Kunststoff umschlossen, wobei das Gehäuse 24 durchlässig ist für die ausgesendete und die reflektierte elektromagnetische Strahlung. Auf einer oberen Stirnseite des Gehäuses 24 sind die Solarzellen 23 zur Stromversorgung des Elektromotors 22 angeordnet.

In Fig. 5 ist die mögliche Ausbildung einer Landmarke 4 bzw. eines Zylinderkörpers 17 gezeigt. Zu erkennen sind die einander gegenüberliegenden Reflektionselemente 16a, 16b, die als tortenstückförmige Zylinderaussparungen ausgeformt sind. Zusätzlich zu den beiden Reflektionselementen 16a, 16b können die strichliert gezeichneten, um jeweils 90° zu den Reflektionselementen 16a, 16b angeordneten, einander gegenüberliegenden Reflektionselemente 16c und 16d vorgesehen werden. Zusätzlich können weitere Reflektionselemente vorgesehen werden. Es ist auch denkbar an dem Zylinderkörper 17 lediglich ein Reflektionselement auszubilden. Ein unterschiedliches Reflektionsverhalten von zwei Landmarken kann auch bei identischem Reflektionselementen bzw. einer identischen Anzahl von Reflektionselementen realisiert werden, wenn die Reflektionselemente der jeweiligen Landmarken mit unterschiedlicher Drehzahl angetrieben sind.

In Fig. 6 ist ein alternativ ausgebildeter Zylinderkörper 17 einer Landmarke 4 mit einem einzigen Reflektionselement 15a gezeigt. Das Reflektionselement 15a ist als sich trichterförmig bzw. pyramidenförmig radial nach innen verjüngende Aussparung in einer Mantelfläche 3 des Zylinderkörpers 17 ausgebildet.

## Patentansprüche

1. Lokalisierungssystem für ein Roboterfahrzeug (2), umfassend zumindest:
eine Sendeeinheit (11) zum Aussenden eines elektromagnetischen Signals, und
eine Empfangseinheit (12) zum Empfangen eines ersten an einer ersten Landmarke (4) reflektierten elektromagnetischen Signals (19) und mindestens eines zweiten an einer zweiten Landmarke (5 bis 9) reflektierten elektromagnetischen Signals (20), und
mit einer Steuereinheit zum Ermitteln der Position eines Roboterfahrzeugs (2) auf der Basis der von der Empfangseinheit (12) empfangenen elektromagnetischen Signalen (19, 20), sowie
eine erste und mindestens eine zweite Landmarke (4 bis 9) mit jeweils mindestens einem Reflektionselement (15a, 15b; 16a bis 16d),
**dadurch gekennzeichnet,**
**dass** die erste und die zweite Landmarke (4, 5) ein voneinander unterschiedliches Reflektionsverhalten aufweisen.

2. System nach Anspruch 1,
**dadurch gekennzeichnet,**
**dass** die erste und die zweite Landmarke (4, 5) derart ausgebildet sind, dass das erste an der ersten Landmarke (4) reflektierte Signal (19) gegenüber dem zweiten an der zweiten Landmarke (5) reflektierten elektromagnetischen Signal (20) einen unterschiedlich modulierten Intensitätsverlauf aufweist.

3. System nach einem der Ansprüche 1 oder 2,
**dadurch gekennzeichnet,**
**dass** die Landmarken (4 bis 9) eine unterschiedliche Anzahl und/oder unterschiedlich ausgebildete Reflektionselemente (15a, 15b; 16a bis 16d) aufweisen.

4. System nach einem der vorhergehenden Ansprüche,
**dadurch gekennzeichnet,**
**dass** das mindestens eine Reflektionselement (15a, 15b; 16a bis 16d) der ersten Landmarke (4) und/oder des mindestens einen Reflektionselementes (15a, 15b; 16a bis 16d) der zweiten Landmarke (5) bewegt angetrieben ist.

5. System nach Anspruch 4,
**dadurch gekennzeichnet,**
**dass** das mindestens eine Reflektionselement (15a, 15b; 16a bis 16d) der ersten Landmarke (4) mit einer anderen Geschwindigkeit und/oder in einem anderen Bewegungsverlauf angetrieben ist, als das mindestens eine Reflektionselement (15a, 15b; 16a bis 16d) der zweiten Landmarke (5).

6. System nach einem der vorhergehenden Ansprüche,
**dadurch gekennzeichnet,**
**dass** das mindestens eine Reflektionselement (15a, 15b; 16a bis 16d) der ersten Landmarke (4) und/oder das mindestens eine Reflektionselement (15a, 15b; 16a bis 16d) der zweiten Landmarke (5) rotatorisch, insbesondere um jeweils eine lotrechte Rotationsachse, angetrieben sind.

7. System nach Anspruch 6,
**dadurch gekennzeichnet,**
**dass** das mindestens eine Reflektionselement (15a, 15b; 16a bis 16d) der ersten Landmarke (4) mit einer anderen, vorzugsweise konstanten, Rotationsgeschwindigkeit angetrieben ist als das mindestens eine, vorzugsweise mit einer konstanten Rotationsgeschwindigkeit angetriebene, Reflektionselement (15a, 15b; 16a bis 16d) der zweiten Landmarke (5).

8. System nach einem der Ansprüche 5 bis 8,
**dadurch gekennzeichnet,**
**dass** zumindest eine der Landmarken (4 bis 9) einen Elektromotor (22) zum Antreiben des jeweils mindestens einen Reflektionselementes (15a, 15b; 16a bis 16d) aufweist.

9. System nach Anspruch 8,
**dadurch gekennzeichnet,**
**dass** zum Betreiben des Elektromotors (22) mindestens eine Batterie, und/oder mindestens ein Akkumulator und/oder mindestens eine Solarzelle (23) vorgesehen sind/ist.

10. System nach einem der vorhergehenden Ansprüche,
**dadurch gekennzeichnet,**
**dass** das Reflektionselement (15a, 15b; 16a bis 16d) mindestens einer der Landmarken (4 bis 9) in einem für die elektromagnetischen Signale durchlässigen Gehäuse (24), insbesondere aus Kunststoff angeordnet ist.

11. System nach einem der vorhergehenden Ansprüche,
**dadurch gekennzeichnet,**
**dass** das System zumindest ein Roboterfahrzeug umfasst.

12. System nach Anspruch 11,
**dadurch gekennzeichnet,**
**dass** die Steuermittel (13) die Antriebsmittel eines Roboterfahrzeugs (2) auf Basis der ermittelten Position ansteuern.

13. System nach zumindest einem der Ansprüche 11 oder 12,
**dadurch gekennzeichnet,**
**dass** das Roboterfahrzeug (2) ein Rasenmäher mit einem Mähwerk ist.
